# EUROPÄISCHE PATENTANMELDUNG

(11) **EP 1 243 528 A1**
(43) Veröffentlichungstag der Anmeldung: **25.09.2002**
(21) Anmeldenummer: 02002231.5
(22) Anmeldetag: 30.01.2002
(51) Int. Cl.: B65G 13/075

(54) **Bremsrolle einer Rollenbahn**

(30) Priorität: 21.03.2001 DE 10113631
(71) Anmelder: Schmale, Erhard, 34479 Breuna-Wettesingen (DE)
(72) Erfinder: Schön, Kurt, 34479 Breuna-Wettesingen (DE); Schmale, Erhard, 34479 Breuna-Wettesingen (DE)
(74) Vertreter: WALTHER, WALTHER & HINZ Patentanwälte

(57) **Zusammenfassung**

Gegenstand der Erfindung ist eine Bremsrolle (3, 40, 50, 60) einer Rollenbahn (1) mit einem zylindrischen Mantel (32, 42, 52, 62), wobei der Mantel auf einer Achse (31, 41, 51, 61) drehbar gelagert ist, die durch Träger (2) gehalten ist, wobei der zylindrische Mantel eine Bremseinrichtung aufweist, wobei die Bremseinrichtung Mittel zur Erzeugung elektromagnetischer Felder zur Abbremsung des zylindrischen Mantels (32, 42, 52, 62) aufweist.

## Beschreibung

Die Erfindung betrifft eine Bremsrolle einer Rollenbahn, mit einem zylindrischen Mantel, wobei der Mantel auf einer Achse drehbar gelagert ist, die durch Träger gehalten ist, wobei der zylindrische Mantel eine Bremseinrichtung aufweist.

Eine Rollenbahn zeichnet sich durch mehrere parallel zueinander im Träger angeordnete Rollen aus, die dem Transport der verschiedensten Güter dienen. Derartige Rollenbahnen sind Bestandteil von sogenannten Durchlaufregalen zum Kommissionieren von bestimmten Lagereinheiten, beispielsweise in Form von Kästen oder auch Paletten. Ein solches Durchlaufregal hat zwei Enden, nämlich eine Aufgabeseite und eine Entnahmeseite. Eine Palette oder eine Kiste, die beispielsweise auf der Aufgabeseite auf die Rollenbahn aufgesetzt wird, bewegt sich auf Grund der Schwerkraft in Richtung der Entnahmeseite. An der Entnahmeseite können dann einzelne Waren oder die Palette insgesamt entnommen werden. Nun besitzen diese Rollenbahnen, damit die Lagergüter auf Grund der Schwerkraft auf der Rollenbahn entlanggleiten können, einen gewissen Neigungswinkel. Üblicherweise beträgt die Neigung ca. 2° Grad. Damit die Paletten bzw. die Boxen nicht mit zu hoher Geschwindigkeit an der Entnahmeseite der Rollenbahn des Durchlaufregales ankommen, weisen die Rollenbahnen zum Abbremsen der Güter sogenannte Bremsrollen auf, um die Gefahr der Beschädigung der Güter in der Box bzw. auf der Palette bei Anstoßen an dem Anschlag der Entnahmeseite der Rollenbahn zu vermeiden. Diese bekannten Bremsrollen besitzen ein bestimmtes vorgegebenes Bremsmoment. Die Größe des Bremsmomentes ist abgestellt auf den Neigungswinkel der Rollenbahn und auf das Gewicht der darauf entlanggleitenden Güter. Das heißt, dass bei Gegenständen mit geringerem Gewicht das Bremsmoment geringer sein kann, wohingegen bei schweren Gütern ein hohes Bremsmoment erforderlich ist.

Eine bekannte Bremsrolle besteht im Einzelnen aus einem zylindrischen Stahlmantel, der in seinem Inneren eine Bremseinrichtung aufweist. Eine solche Bremseinrichtung ist beispielsweise nach Art eines Planetengetriebes aufgebaut. Ein solches Planetengetriebe ist allerdings sehr anfällig im Hinblick auf Verschmutzung, wobei hinzu kommt, dass ein derartiges Planetengetriebe bei unsachgemäßem Einsatz relativ schnell beschädigt wird. Ein solcher unsachgemäßer Einsatz kann insbesondere darin begründet liegen, dass die auf der Rollenbahn transportierten Gegenstände zu schnell in den Bereich der Bremsrollen gelangen, wodurch die Beschleunigung des Mantels der Bremsrolle so hoch ist, dass auf Grund der Massenträgheit des in dem Mantel angeordneten Planetengetriebes das Planetengetriebe zerstört wird.

Des Weiteren sind Bremsrollen mit einer Bremseinrichtung bekannt, die nach Art einer Fliehkraftbremse arbeitet. Auch derartige Bremseinrichtungen sind schmutz- und verschleißempfindlich.

Ein weiterer Nachteil derartiger Bremsrollen besteht darin, dass sowohl das Planetengetriebe, als auch die Fliehkraftbremse konstruktionsbedingt ein relativ hohes Losbrechmoment aufweist. Das heißt, dass insbesondere bei leichten Gütern die Gefahr besteht, dass das Losbrechmoment nicht überwunden wird, und das Gut, beispielsweise die Palette oder die Box, gar nicht bis zur Entnahmeseite gelangt.

Der Erfindung liegt daher die Aufgabe zu Grunde, eine Bremsrolle einer Rollenschiene für eine Rollenbahn eines Durchlaufregales zu schaffen, die einerseits preiswert in der Herstellung ist, andererseits robust ist und eine lange Lebensdauer aufweist.

Die Aufgabe wird erfindungsgemäß dadurch gelöst, dass die Bremseinrichtung, die in dem Mantel der Bremsrolle untergebracht ist, Mittel zur Erzeugung elektromagnetischer Felder zur Abbremsung des zylindrischen Mantels aufweist. Zur Erzeugung elektromagnetischer Felder ist die Bremseinrichtung nach Art eines Generators bzw. Elektromotors bzw. nach Art einer Wirbelstrombremse aufgebaut.

Eine solche Bremse hat den Vorteil, dass diese kein Losbrechmoment aufweist. Wesentlicher ist allerdings noch, dass mit steigender Drehzahl das Bremsmoment kontinuierlich zunimmt. Das heißt, dass Güter, die mit zu hoher Geschwindigkeit die Bremsrolle passieren, mehr abgebremst werden, als langsamere Güter. Somit ist immer gewährleistet, dass die Güter nicht mit hoher Geschwindigkeit an der Entnahmeseite ankommen. Des Weiteren arbeiten solche Rollen auch im Wesentlichen verschleißfrei. Insbesondere bei der Ausbildung der Bremseinrichtung als Wirbelstrombremse ist vorgesehen, dass die Achse auf ihrem Umfang mehrere Permanentmagnete mit wechselnder Polung aufweist, wobei der zylindrische Mantel aus einem elektrisch leitfähigen Material, z. B. Stahl, ausgebildet ist. Durch die Anordnung der Permanentmagnete werden in den Stahlzylinder Wirbelströme induziert die Wärme erzeugen, was einen Leistungsverbrauch bedeutet, der wiederum die gewünschte Bremswirkung erzeugt.

Nach einem besonderen Merkmal dieser Ausführungsform ist vorgesehen, dass der zylindrische Mantel auf seiner Innenmantelfläche einen Einsatzkörper aus elektrisch gut leitfähigem Material, z. B. Kupfer oder Aluminium aufweist. Die Anordnung eines unmittelbar den Magneten gegenüberliegenden Mantels aus Aluminium oder Kupfer bewirkt, dass auf Grund der höheren, elektrischen Leitfähigkeit eine höhere Bremswirkung zu Stande kommt. Festzuhalten ist somit, dass die Ausbildung der Bremsrolle ähnlich dem eines Generators oder Motors ist, wobei zwischen den Magneten und dem zylindrischen Mantel bzw. dem Einsatzköper ein Luftspalt vorhanden sein muss.

Nach einer anderen Ausführungsform ist vorgesehen, dass die Bremseinrichtung einen auf der Achse angeordneten Käfig mit mehreren Wicklungen aufweist, wobei auch hier ebenfalls der zylindrische Mantel aus elektrisch leitfähigem Material besteht. Die Wicklungen ersetzen hierbei die Permanentmagnete, wobei die Wicklungen spannungsführend sind, wobei durch eine Spannungsänderung entsprechend auch die Bremskraft beeinflusst werden kann, weil bei höherer Spannung entsprechend höhere Wirbelströme induziert werden. Auch hierbei ist nach einem besonderen Merkmal dieser Ausführungsform vorgesehen, dass der Mantel auf seiner Innenmantelfläche einen Einsatzkörper aus elektrisch gut leitfähigem Material, z. B. Aluminium oder Kupfer, aufweist. Die Polzahl der Wicklungen beträgt mindestens 2, wobei bei höherer Polzahl ein gleichmäßiger Lauf und eine entsprechend höhere Bremswirkung zu erzielen ist. Im Grundsatz entspricht der Aufbau einer derartigen Bremsrolle dem eines Asynchronmotors.

Nach einer weiteren Variante zu dieser letzten Ausführungsform ist vorgesehen, dass zwischen den einzelnen Wicklungen um die Achse herum ein Blechpaket bzw. ein Eisenkern vorgesehen ist, wobei der Mantel auf seiner Innenmantelfläche Permanentmagnete mit wechselnder Polung aufweist. Auch hier ist die Polzahl der Wicklungen mindestens 2. Der Aufbau der Bremsrolle in Bezug auf die Bremseinrichtung ähnelt hierbei dem eines Servomotors oder eines permanenterregten Synchronmotors.

Vorteilhaft bei den beiden letzten Ausführungsformen ist, dass die Bremswirkung durch Regelung der Spannung variabel ist. Das heißt, dass in Abhängigkeit von dem Gewicht, beispielsweise einer Palette auf der Rollenbahn bzw. auch aus der Art des Gutes mit weichem Boden oder härterem Boden, entsprechend die Bremskraft einstellbar ist.

Anhand der Zeichnungen wird die Erfindung nachstehend beispielhaft näher erläutert.
- Fig. 1: zeigt schematisch eine Rollenbahn mit Bremsrollen;
- Figur 2 bis Figur 5: zeigen verschiedene Ausführungsformen, wie mittels elektrischer Energie einer Abbremsung erfolgen kann.

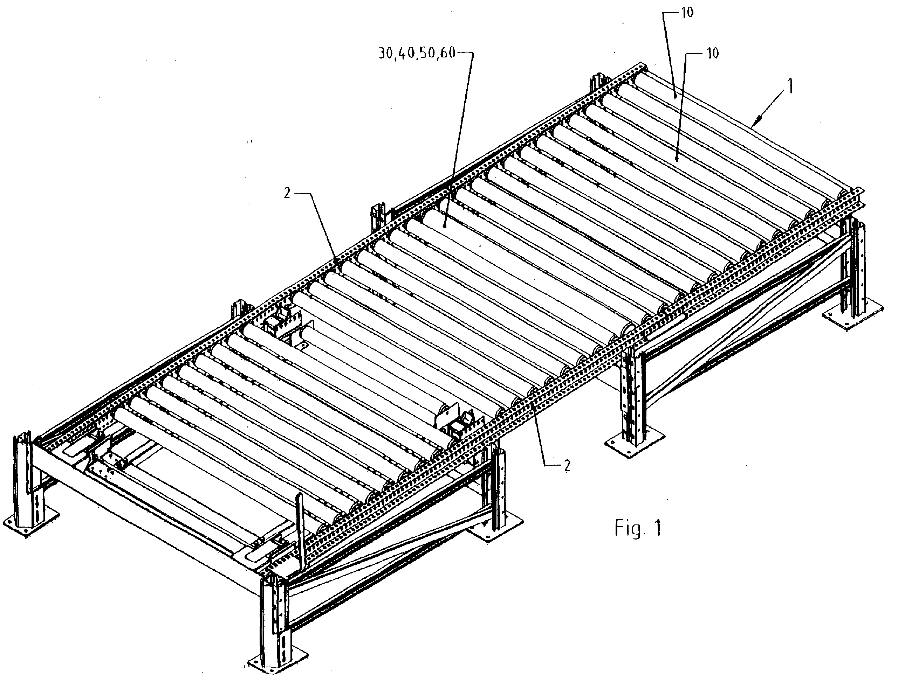

Figur 1 zeigt schematisch eine Rollenbahn 1, mit zwei parallelen Trägern 2, wobei die Träger 2 der Aufnahme der Rollen dienen. Die durch die Träger 2 gehaltenen Rollen setzen sich aus Tragrollen 10 und Bremsrollen 30, 40, 50, 60 zusammen. Die Bremsrollen 30, 40, 50, 60 zeigen Achsen 31, 41, 51, 61, die mit den Trägern 2 drehfest verbunden sind. Die Bremsrollen 30, 40, 50, 60 sind jeweils verschiedenartig, wie sich dies aus den nachstehenden Erläuterungen ergibt.

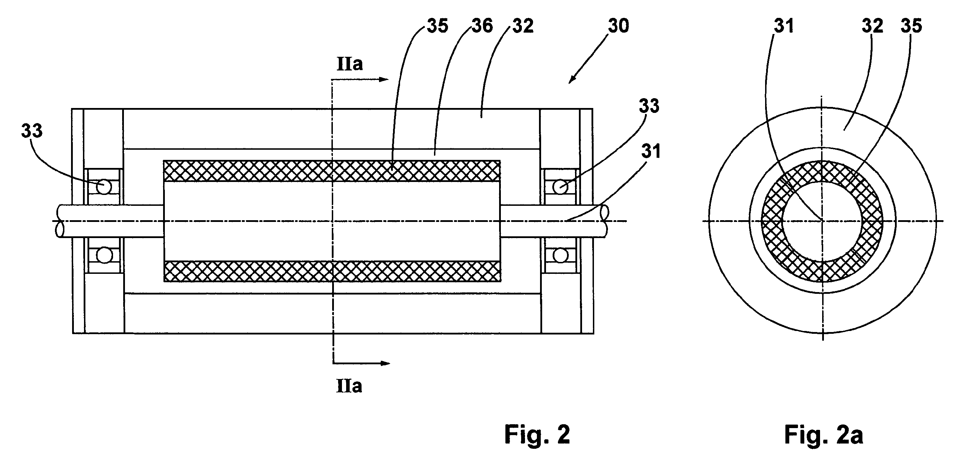

Bei der gemäß Fig. 2a dargestellten Ausführungsform einer Bremsrolle 30 mit der Achse 31 ist ein zylindrischer Mantel 32 aus Stahl vorgesehen, der durch Lager 33 auf der Achse 31 drehbar gelagert ist. Die Achse 31 zeigt darüber hinaus mehrere Permanentmagnete 35 mit der Polzahl 8. Zwischen den Permanentmagneten 35 und dem metallischen Zylinder 32 besteht der Luftspalt 36. Bei Drehung des Zylinders 32 relativ zu den Permanentmagneten werden in den Stahlzylinder Wirbelströme induziert, die schlussendlich die Bremswirkung erzeugen. Die Größe der Bremswirkung ist hierbei natürlich abhängig von der Fläche der Permanentmagnete, was bedeutet, dass über eine Vergrößerung oder eine Verkleinerung der Magnetfläche eine Verstärkung bzw. Verminderung der Bremskraft möglich ist.

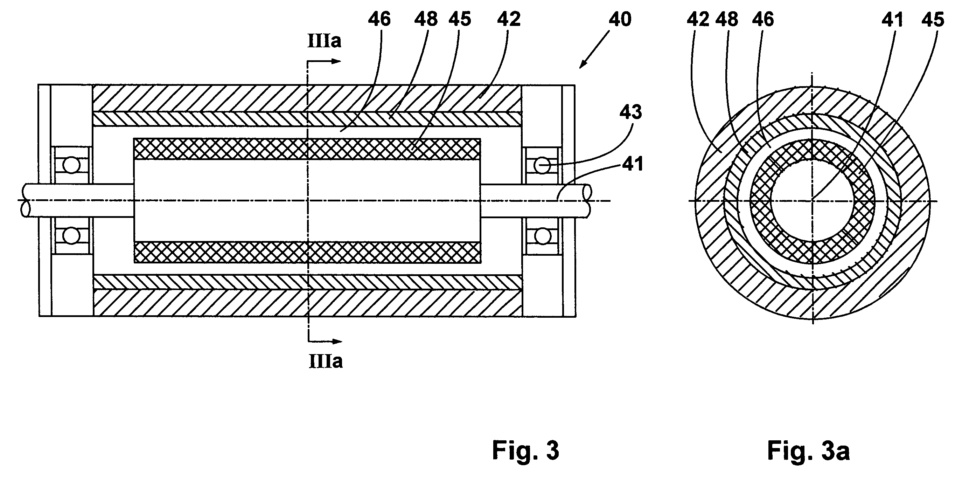

Die Ausführungsform gemäß Fig. 3 bzw. Fig. 3a unterscheidet sich von der gemäß Fig. 1 lediglich dadurch, dass auf der Innenmantelfläche des Zylinders 42 ein zylindrischer Einsatzkörper 48 aus besonders elektrisch gut leitendem Material, z. B. Aluminium oder Kupfer, vorgesehen ist. In Verbindung mit den Permanentmagneten 45, mit einer Polzahl 8, die auf der Achse 41 gelagert sind, die wiederum durch die Lager 43 mit dem Zylinder 42 in Verbindung steht, ergibt sich auf Grund der besseren Leitfähigkeit des zylindrischen Einsatzkörpers 48 eine höhere Bremswirkung. Das heißt, dass durch die Wahl des Materials des Einsatzkörpers 48 auch die Bremswirkung beeinflusst werden kann. Der Luftspalt trägt das Bezugszeichen 46.

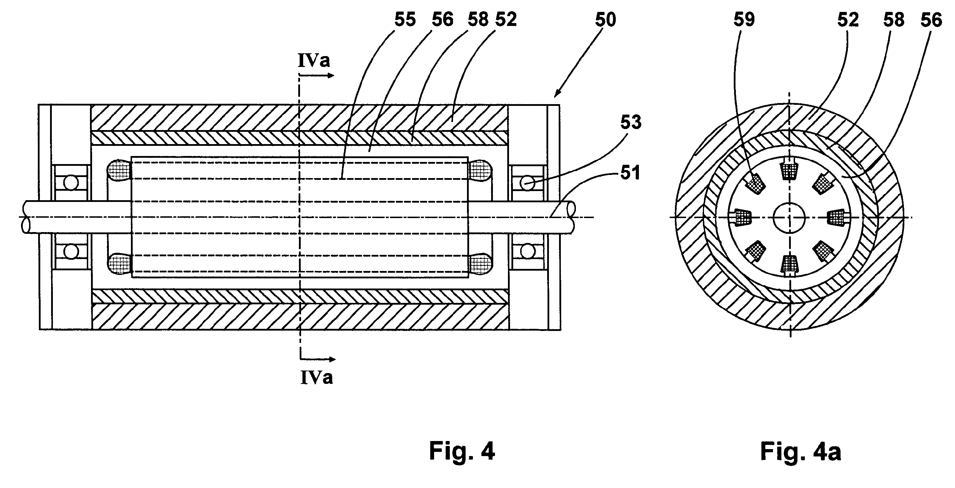

Bei der Ausführungsform gemäß der Fig. 4 und 4a zeichnet sich die Bremsrolle 50 durch einen Zylinder 52 aus, der wiederum durch das Lager 53 auf der Achse 51 drehbar abgestützt gelagert ist. Der Zylinder 52 weist auf seiner Innenseite einen Einsatzkörper 58 aus besonders elektrisch gut leitfähigem Material, z. B. Kupfer oder Aluminium, auf. Auf der Achse 51 sind umfangsverteilt acht Wicklungen 59 bilden mit der Achse 51 den Rotor 55. Die Wicklungen 59, die in einem Blechpaket oder einem Eisenkern eingebettet sein können, stehen darüber hinaus mit einer Spannungsversorgung in Verbindung, so dass über die Änderung der Spannung die Bremswirkung beeinflussbar ist. Diese Ausbildung der Bremsrolle ähnelt dem Aufbau eines Asynchronmotors und besitzt demzufolge zwischen Rotor 55 und Einsatzkörper 58 einen Luftspalt 56.

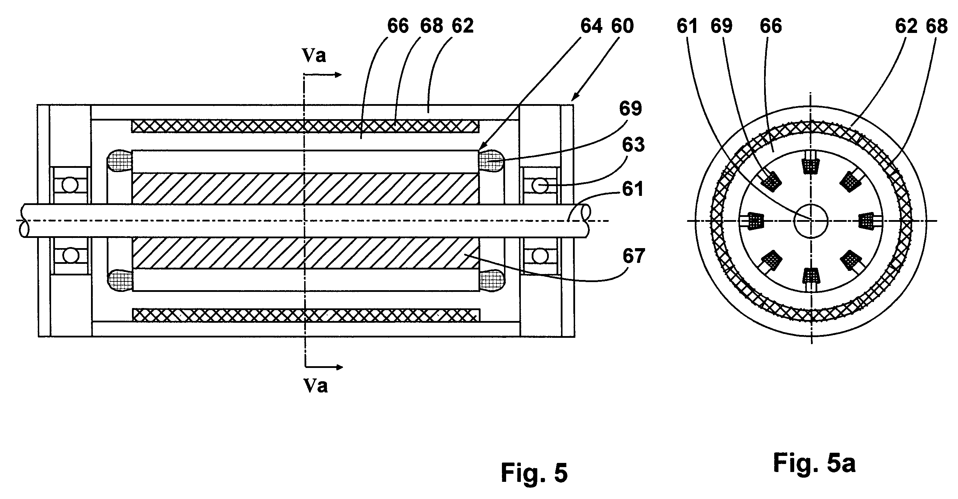

Die Ausführungform gemäß Fig. 5 und Fig. 5a unterscheidet sich von der gemäß Fig. 4 und 4a dadurch, dass hier auf der Innenseite des zylindrischen Mantels 62 an der Bremsrolle 60 Permanentmagnete 68 vorgesehen sind, die durch einen Luftspalt 66 von dem lagernden Rotor 64 mit der Achse 61 beabstandet ist. Der Rotor 64 besitzt ein Blechpaket 67 mit mehreren Wicklungen 69. Die Wicklungen 69 werden nach außen geführt und mit entsprechenden Widerständen verbunden, so dass durch die Größe der Widerstände die Bremswirkung zu beeinflussen ist. Der Aufbau dieser Bremsrolle ähnelt einem Servomotor oder einem permanenterregten Synchronmotor.

## Patentansprüche

1. Bremsrolle (30, 40, 50, 60) einer Rollenbahn (1) mit einem zylindrischen Mantel (32, 42, 52, 62), wobei der Mantel auf einer Achse (31, 41, 51, 61) drehbar gelagert ist, die durch Träger (2) gehalten ist, wobei der zylindrische Mantel eine Bremseinrichtung aufweist,
**dadurch gekennzeichnet,**
**dass** die Bremseinrichtung Mittel zur Erzeugung elektromagnetischer Felder zur Abbremsung des zylindrischen Mantels (32, 42, 52, 62) aufweist.

2. Bremsrolle nach Anspruch 1,
**dadurch gekennzeichnet,**
**dass** die Bremseinrichtung nach Art einer Wirbelstrombremse ausgebildet ist.

3. Bremsrolle nach Anspruch 2,
**dadurch gekennzeichnet,**
**dass** die Achse (31, 41) auf ihrem Umfang mehrere Permanentmagnete (35, 45) mit wechselnder Polung aufweist, wobei der zylindrische Mantel (32, 42) aus einem elektrisch leitfähigen Material, z. B. Stahl, ausgebildet ist.

4. Bremsrolle nach einem oder mehreren der voranstehenden Ansprüche,
**dadurch gekennzeichnet,**
**dass** der zylindrische Mantel (42) auf seiner Innenmantelfläche einen Einsatzkörper (48) aus elektrisch gut leitfähigem Material, z. B. Kupfer oder Aluminium, aufweist.

5. Bremsrolle nach einem oder mehrerer der voranstehenden Ansprüche,
**dadurch gekennzeichnet,**
**dass** zwischen den Magneten (35, 45) und dem zylindrischen Mantel (32, 42) bzw. dem Einsatzköper (48) ein Luftspalt (36, 46) vorgesehen ist.

6. Bremsrolle nach Anspruch 1,
**dadurch gekennzeichnet,**
**dass** die Bremseinrichtung mehrere auf der Achse (51, 61) angeordnete Wicklungen (59, 69) aufweist.

7. Bremsrolle nach Anspruch 6,
**dadurch gekennzeichnet,**
**dass** der zylindrische Mantel (52, 62) aus elektrisch gut leitfähigem Material, z. B. Aluminium oder Kupfer, besteht.

8. Bremsrolle nach Anspruch 6,
**dadurch gekennzeichnet,**
**dass** die Polzahl der Wicklungen (52, 62) mindestens 2 beträgt.

9. Bremsrolle nach Anspruch 6,
**dadurch gekennzeichnet,**
**dass** der zylindrische Mantel (52) einen Einsatzkörper (58) aus elektrisch gut leitfähigem Material, z. B. Aluminium oder Kupfer, aufweist.

10. Bremsrolle nach Anspruch 6,
**dadurch gekennzeichnet,**
**dass** die Achse (61) im Bereich der Wicklungen (69) ein Blechpaket (67) aufweist.

11. Bremsrolle nach Anspruch 10,
**dadurch gekennzeichnet,**
**dass** der Mantel (62) auf seiner Innenmantelfläche Permanentmagnete (68) mit wechselnder Polung aufweist.

12. Bremsrolle nach Anspruch 10,
**dadurch gekennzeichnet,**
**dass** die Polzahl der Wicklung (69) mindestens 2 beträgt.
